# NEUE EUROPÄISCHE PATENTSCHRIFT

(11) **EP 0 787 336 B2**
(45) Veröffentlichungstag und Bekanntmachung des Hinweises auf die Entscheidung über den Einspruch: **01.08.2001**
(45) Hinweis auf die Patenterteilung: 15.07.1998
(21) Anmeldenummer: 95933225.5
(22) Anmeldetag: 10.10.1995
(51) Int. Cl.: G06K 19/18

(54) **VORRICHTUNG ZUM LESEN UND KENNZEICHNEN EINES BEDRUCKTEN, KARTENFÖRMIGEN DATENTRÄGERS**
DEVICE FOR READING AND MARKING A PRINTED CARD-SHAPED DATA CARRIER
DISPOSITIF DE LECTURE ET DE MARQUAGE D'UN SUPPORT DE DONNEES IMPRIME, EN FORME DE CARTE

(30) Priorität: 10.10.1994 AT 190694
(43) Veröffentlichungstag der Anmeldung: 06.08.1997
(73) Patentinhaber: SkiData AG, 5083 Gartenau (AT)
(72) Erfinder: KOCZNAR, Wolfram, A-6020 Innsbruck (AT)
(74) Vertreter: Hofinger, Engelbert, Dr.Dr.
(86) Internationale Anmeldenummer: AT9500196
(87) Internationale Veröffentlichungsnummer: WO9611451

(56) Entgegenhaltungen:
- EP-A- 0 344 789
- EP-A- 0 473 403
- WO-A-91/00595
- WO-A-92/21105
- US-A- 4 330 350
- US-A- 4 904 853
- PATENT ABSTRACTS OF JAPAN vol. 14 no. 478 (M-1036) ,18.Oktober 1990 & JP,A,02 192999 (OMRON TATEISI ELECTRON CO) 30.Juli 1990,

## Beschreibung

Die Erfindung betrifft eine Vorrichtung zum Lesen und Kennzeichnen eines bedruckbaren, kartenförmigen Datenträgers, insbesondere Fahrkarte, Skipaß oder dergleichen, der auf zumindest einer Seite mit einer wärmeempfindlichen Schicht zur visuell lesbaren Darstellung von Daten durch thermische Beaufschlagung versehen ist, mit einem Transportmechanismus zur Bewegung des Datenträgers in einem eine Transportbahn bestimmenden, flachen Kanal, und mit einer einen Thermodruckkopf aufweisenden Einrichtung zur visuell lesbaren Kennzeichnung des Datenträgers, wobei der Thermodruckkopf einen im ersten Temperaturbereich wirksamen Schreibkopf zum Beschreiben der wärmeempfindlichen Schicht und einen im zweiten Temperaturbereich wirksamen Löschkopf zum Löschen vorhandener Zeichen aufweist.

Ein ein Elektromodul enthaltender, über einen längeren Zeitraum verwendbarer Datenträger ist beispielsweise der WO-A 92/21105 zu entnehmen, wobei für den Benützer wesentliche Teile der im Elektronikmodul enthaltenen Daten in der thermosensitiven Beschichtung des Kartenkörpers darstellbar sind und nicht mehr entfernt werden können. Thermoreversible Beschichtungen und diese enthaltende kartenförmige Datenträger sind beispielsweise aus den EP-A 174 902 oder EP-A 344 789 sowie der WO-A 91/00595 bekannt. Der löschende Temperaturbereich liegt dabei im allgemeinen zwischen 50° und 100° C, und die Beschriftung erfolgt bei Temperaturen über 110° C. Eine Beschriftung der thermosensitiven Beschichtung kann also gelöscht und neu aufgebracht werden.

In der WO-A 91/00595 wird zum Schreiben und Löschen jeweils ein eigener Thermokopf verwendet, dem jeweils eine auch als Transportrolle eingesetzte Anpreßrolle zugeordnet ist.

In der EP-A 344 789 ist schematisch eine Vorrichtung beschrieben, deren Thermodruckkopf auf die jeweils benötigte Schreib- oder Löschtemperatur erhitzt wird. Außer dem Thermodruckkopf kann die Vorrichtung nach der EP-A 344 789 auch örtlich getrennt vom Thermodruckkopf einen nicht näher definierten thermischen Bildlöschbereich umfassen.

Eine Vorrichtung der eingangs genannten Art ist der EP-A 473 403 zu entnehmen, deren Thermodruckkopf aus einem Schreib- und einem Löschkopf gebildet ist, und für die Bearbeitung von reversiblen thermosensitiven Beschichtungen zwei unterschiedliche Funktionen erfüllt: Zum Löschen geschriebener Zeichen wird die gesamte zu bearbeitende Fläche möglichst gleichmäßig auf die Löschtemperatur gebracht. Zum Beschriften wird die thermosensitive Beschichtung nur örtlich begrenzt, nämlich innerhalb der Konturen der wiederzugebenden Zeichen auf die etwas höhere Schreibtemperatur erwärmt. Der Thermodruckkopf ist senkrecht zur Transportbahn motorisch verstellbar angeordnet, und an der gegenüberliegenden Seite ist eine starre Stützplatte vorgesehen.

Die beiden Köpfe sind bevorzugt nebeneinander auf einem gemeinsamen Träger so angeordnet, daß der Datenträger zuerst den Löschkopf und dann den Schreibkopf passiert. Somit können in einem Bearbeitungsvorgang alte Zeichen gelöscht und neue geschrieben werden, wobei durch die Vorerwärmung beim Löschen die Beschriftungszeiten verkürzt sind. Der Löschkopf kann auch, ohne daß Zeichen zu löschen sind, für die bloße Vorwärmung der thermosensitiven Beschichtung eingesetzt werden.

Beim Bedrucken durch Wärmeeinwirkung soll der Datenträger zumindest im Druckbereich geringfügig gewölbt sein, damit der Thermodruckkopf etwa tangential am Druckbereich anliegt. Um die Störungsanfälligkeit zu verringern, sollte der Thermodruckkopf nur dann mit dem Datenträger in Berührung kommen, wenn er tatsächlich gebraucht wird. Dies wird erfindungsgemäß durch die im kennzeichnenden Teil des Anspruchs 1 angegebenen Merkmale erreicht. Dadurch, daß die Anpreßrolle zum Thermodruckkopf hin bewegbar angeordnet ist, können nicht nur Datenträger bearbeitet werden, die eine durch Wärmeeinwirkung bedruckbare Zone aufweisen, sondern zusätzlich auch einen Magnetstreifen und/oder ein Elektronikmodul enthalten und gegebenenfalls eine größere Dicke und eine erhöhte Biegesteife aufweisen.

Die zu bearbeitenden Datenträger werden also generell entlang einer ebenen Transportbahn bewegt. Wenn der Datenträger mittels des Thermodruckkopfes bearbeitet werden soll, so wird die Anpreßrolle betätigt, die den Datenträger durchdrückt, sodaß er die der Ausbuchtung des Kanals entsprechende Wölbung erhält. Die durch die gegebene Distanz unterbleibende Berührung eines Datenträgers, wenn er (gerade) nicht zu bedrucken ist, vermeidet die unnötige Verschmutzung und Abnützung der beiden Köpfe, die, da die Anpreßrolle ohnedies bewegt wird, bevorzugt an einem in der Ausbuchtung fixierten Träger angeordnet sind.

Die Lese-Kennzeichnungseinrichtung weist bevorzugt einen Strichcodeleser, einen Magnetstreifenleser und/oder einen IC-Leser auf, wobei der Thermodruckkopf und die Kanalausbuchtung zwischen dem Strichcodeleser und dem Magnetstreifenleser angeordnet sind, sodaß Datenträger mit einem Strichcode, mit einem Magnetstreifen und/oder mit einem Elektronikmodul (IC) maschinell gelesen und bei Bedarf thermisch behandelt werden können, wenn beispielsweise der Speicherinhalt oder dessen Änderungen visuell lesbar zu machen oder ein Strichcode aufzubringen ist. Ein nur zu überprüfender Datenträger läuft in der ebenen Transportbahn frei durch.

Nachstehend wird nun die Erfindung anhand der Figuren der beiliegenden Zeichnung näher beschrieben.

Es zeigen:
- Fig. 1: eine Draufsicht auf einen mit einer erfindungsgemäßen Vorrichtung les- und kennzeichenbaren Datenträger,
- Fig. 2: einen schematischen Längsschnitt durch eine erfindungsgemäße Vorrichtung und
- Fig. 3: eine vergrößerte Ansicht des Thermolösch- und -druckbereiches der Vorrichtung.

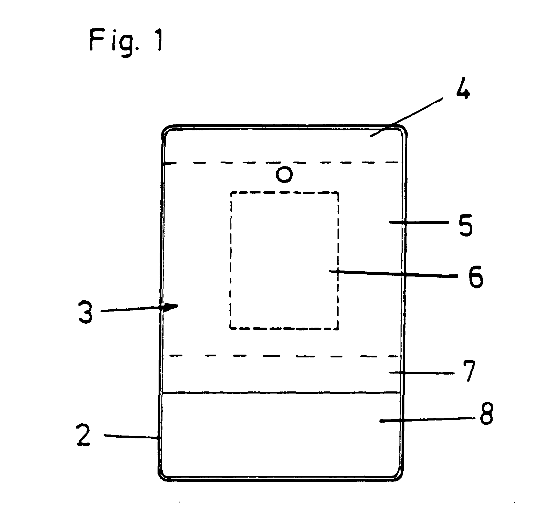

Ein kartenförmiger Datenträger ist in Fig. 1 dargestellt und weist einen ein Elektronikmodul enthaltenden Kartenkörper 1 auf, der insbesondere aus zwei miteinander verpreßlen, gegebenenfalls vorgefertigten Kunststoffelementen besteht. Der Datentrager weist mehrere sichtbare Teilbereiche 5,6,7 und 8 auf. Die Teilbereiche 5,6 und 7 sind an einer transparenten Selbstklebelolie 3 vorgesehen, die lösbar auf dem Kartenkörper 1 angeordnet ist. Der Teilbereich 7 ist irreversibel thermisch beschriftbar, der Teilbereich 5 ist mit üblicher Druckfarbe bedruckbar, und der Teilbereich 6 für die Darstellung des Inhabers des Datenträgers entweder thermosensitiv beschichtet, um das Bild mittels eines Thermodrukkers herzustellen, oder durchsichtig, um ein darunter angeordnetes Foto erkennen zu können. Bei der Ausgabe an den Inhaber sind die Teilbereiche 5,6 und 7 der Selbstklebefolie 3 mit einem abziehbaren Schutzpapier überzogen, und nur ein oberer Randstreifen 4 ist auf dem Kartenkörper 1 festgeklebt.

Im Teilbereich 8 ist eine reversible wärmeempfindliche Schicht vorgesehen, die in einem ersten höheren Temperaturbereich, beispielsweise zwischen 110°C und 130°C in üblicher Weise durch thermische Beaufschlagung mittels eines Thermodruckers beschreibbar ist. Eine nochmalige Wärmeanwendung in einem zweiten, tieferen Temperaturbereich, beispielsweise zwischen 80°C und 100°C löscht die Beschriftung, sodaß der Bereich 8 neuerlich beschriftbar ist.

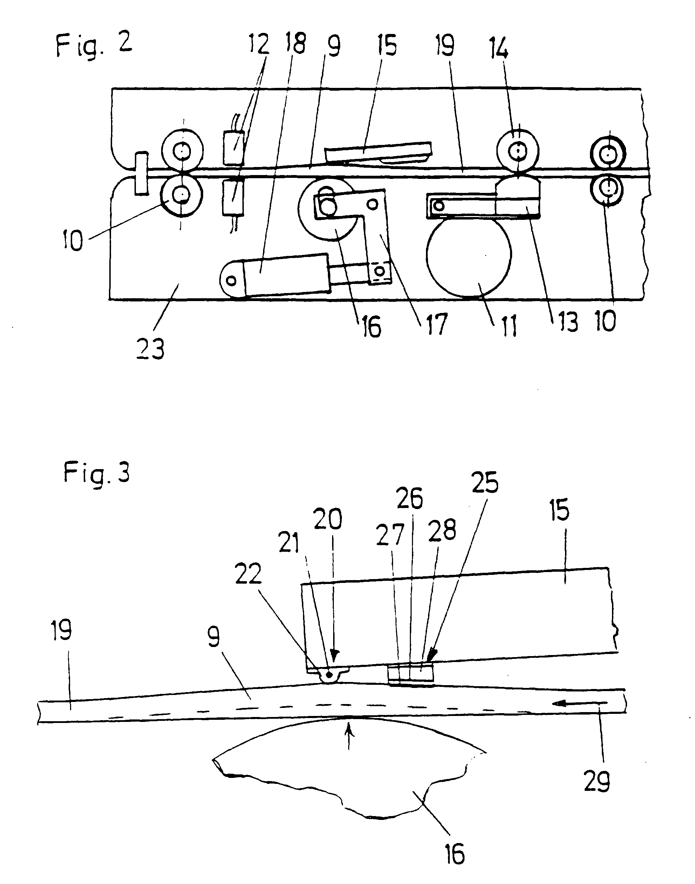

Die Bearbeitung (Codieren, Lesen, Kontrollieren, usw. des Datenträgers, der außer der wärmeempfindlichen Zone einen Magnetstreifen und/oder ein Elektronikmodul enthält, erfolgt mittels einer in der Fig. 2 und 3 gezeigten Vorrichtung.

In einem Gehäuse 23 erstreckt sich ein durch zwei seitliche U-Schienen 19 bestimmter flacher Kanal, dem von einem Motor 11 angetriebene, und nicht angetriebene, starr oder elastisch gelagerte Rollen 10 für den Transport eines kartenförmigen Datenträgers durch den Kanal zugeordnet sind. Entlang des Kanals, der eine ebene Transportbahn definiert, ist eine Lese-Kennzeichnungseinrichtung für alle bekannten Arten von kartenförmigen Datenträgern ausgebildet, die mittig an jeder Kanalflachseite einen Strichcodeleser 12, einen Thermodruckkopf 15 mit einer gegenüberliegenden Anpreßrolle 16, zumindest einen außenseitig angeordneten magnetischen Leseschreibkopf 13 mit einer gegenüberliegenden Anpreßrolle 14, und einen nicht gezeigten IC-Leser umfaßt.

Zwischen dem Strichcodeleser 12 und dem Magnetstreifenleser 13 ist der Kanal mit einer Ausbuchtung 9 versehen, und der Thermodruckkopf 15 ist außerhalb der Transportbahn angeordnet. Den Kanal passierende Datenträger kommen daher nur dann mit dem Thermodruckkopf 15 in Berührung, wenn ein thermisch zu bearbeitender Datenträger von der über einen Hebel 17 von einem Elektromagneten 18 betätigbaren Anpreßrolle 16 angehoben wird. Der Datenträger wird wie in Fig. 2 strichliert dargestellt, gewölbt und schließlich bearbeitet. Somit erfolgt die Wölbung des Datenträgers nur im jeweils erforderlichen Zeitpunkt und in jenem Ausmaß, das zu einer bestmöglichen Bedruckung führt. Die Anpreßrolle 16 wird in einem weit größeren Ausmaß als bei bekannten Vorrichtungen bewegt, da die Ausbuchtung 9 breiter als die größte Dicke der durchzuführenden Datenträger ist. Der Anlagebereich der Anpreßrolle 16 wird somit von einer Position außerhalb der Transportbahn im wesentlichen durch diese hindurch gegen die andere Seite der Transportbahn bewegt und der Spalt auf die gewünschte Breite verringert.

Der Thermodruckkopf 15 weist, wie Fig. 3 im Detail zeigt, einen Schreibkopf 20 auf, mittels dem eine wärmeempfindliche Schicht, also auch die reversible, wärmeempfindliche Schicht mit Zeichen bzw. Daten beschreibbar ist. Der Schreibkopf 20 umfaßt in üblicher Weise ansteuerbare elektrische Widerstandselemente 21, die in einer Glasschutzschicht 22 eingebettet sind. In der Transportrichtung 29 passiert ein Datenträger vor dem Schreibkopf 20 einen Löschkopf 25, der ebenfalls auf dem Thermodruckkopf 15 vorgesehen ist, und in der Ausbuchtung 9 liegt. Der Löschkopf wird auf eine um etwa 20°C niederere Temperatur als der Schreibkopf 20 erwärmt, wenn vorhandene Beschriftungen zu löschen sind. Der Löschkopf 25 umfaßt einen Heizdraht oder eine Heizfolie 26, die von einer Schutzfolie 27 überzogen, auf einem elastischen Polster 28 angeordnet und auf den Thermodruckkopf 15 in geringem Abstand zum Schreibkopf 20 aufgeklebt ist. Mit Hilfe des Löschkopfes 25 können nicht nur zu entfernende Daten auf der thermoreversiblen Schicht gelöscht werden, sondern er bewirkt auch eine Vorwärmung der wärmeempfindlichen Schicht für die nachfolgende Beschriftung, die dadurch wesentlich rascher erfolgen kann. Beschriftungszeiten von 2 msec sind beispielsweise erreichbar, sodaß die Verwendung des Löschkopfes auch für die bloße Vorwärmung von Vorteil ist, wenn keine Zeichen zu löschen sind. Weiters bewirkt die Berührung des Löschkopfes auch eine Reinigung des Datenträgers, sodaß der aufgrund der Glasschutzschicht 22 empfindliche Schreibkopf 20 geschont wird.

## Patentansprüche

1. Vorrichtung zum Lesen und Kennzeichnen eines bedruckbaren, kartenförmigen Datenträgers, insbesondere Fahrkarte, Skipaß oder dergleichen, der auf zumindest einer Seite mit einer wärmeempfindlichen Schicht zur visuell lesbaren Darstellung von Daten durch thermische Beaufschlagung versehen ist, mit einem Transportmechanismus zur Bewegung des Datenträgers in einem eine Transportbahn bestimmenden, flachen Kanal, und mit einer einen Thermodruckkopf (15) aufweisenden Einrichtung zur visuell lesbaren Kennzeichnung des Datenträgers, wobei der Thermodruckkopf (15) einen im ersten Temperaturbereich wirksamen Schreibkopf (20) zum Beschreiben der wärmeempfindlichen Schicht und einen im zweiten Temperaturbereich wirksamen Löschkopf (25) zum Löschen vorhandener Zeichen aufweist, dadurch gekennzeichnet, daß eine dem Thermodruckkopf (15) gegenüberliegende Anpreßrolle (16) zum Thermodruckkopf (15) hin bewegbar angeordnet ist, wobei der Thermodruckkopf (15) in einer Ausbuchtung des Kanals (2) so weit außerhalb der Transportbahn vorgesehen ist, daß thermisch nicht zu bearbeitende Datenträger den Thermodruckkopf (15) nicht berühren.

2. Vorrichtung nach Anspruch 1, dadurch gekennzeichnet, daß in der Transportrichtung des Datenträgers zuerst der Löschkopf (25) und dann der Schreibkopf (20) angeordnet ist.

## Claims

1. An apparatus for reading and identifying a data carrier in card form, which can have printing thereon, in particular a travel card, a ski pass an the like, which is provided on at least one side with a heat-sensitive layer for the visually readable representation of data by a thermal effect, with a transport mechanism for moving the data carrier in a flat passage which determines a transport path, and a device having a thermal print head (15) for visually readably identifying the data carrier, wherein the thermal print head (15) has a writing head (29) which is operative in the first temperature range for writing the heat-sensitive layer and an erasing head (25) which is operative in the second temperature range for erasing existing characters, characterised in that a backing roller (16) disposed opposite the thermal print head (15) is arranged movably towards the thermal print head (15), wherein the thermal print head (15) is provided in an outward bulge portion of the passage (2), so far outside the transport path that data carrier thermally not to be affected do not touch the thermal print head (15).

2. Appartus as set forth in claim 1 characterised in that first the erasing head (25) and then the writing head (20) are arranged in the transport direction of the data carrier.

## Revendications

1. Dispositif destiné à lire et à caractériser un support de données en forme de carte, pouvant être imprimé, en particulier un billet, un forfait de ski ou similaire, qui est muni au moins sur une face d'une couche thermosensible destinée à la représentation visuelle lisible de données au moyen d'une sollicitation thermique, avec un mécanisme de transport pour déplacer le support de données dans un canal plat formant piste de transport, et avec un dispositif présentant une tête de thermo-impression (15) destinée à la caractérisation visuellement lisible du support de données, la tête de thermo-impression (15) présentant une tête d'ecriture (20) efficace dans une première plage de températures pour écrire sur la couche thermosensible et une tête d'effacement (25) efficace dans une seconde plage de températures pour effacer les caractères existants, caractérisé en ce qu'un rouleau presseur (16) situé à l'opposé de la tête de thermo-impression (15) est agencé pour se déplacer en direction de la tête de thermo-impression (15), la tête de thermo-impression (15) étant logée dans une courbure du canal (9) prévue suffisamment à l'extérieur de la piste de transport pour que les supports de données n'étant pas à traiter thermiquement ne touchent pas la tête de thermo-impression (15).

2. Dispositif selon la revendication 1, caractérisé en ce qu'est d'abord agencée dans la direction de transport du support de données, la tête d'effacement (25), puis la tête d'ecriture (20).
